# EUROPEAN PATENT SPECIFICATION

(11) **EP 0 478 067 B1**
(45) Date of publication and mention of the grant of the patent: **23.08.1995**
(21) Application number: 91202401.5
(22) Date of filing: 13.09.1991
(51) Int. Cl.: C09D 5/00, A01G 9/14

(54) **Easily removable coating protective against solar radiation**
Leicht entfernbarer Überzug zum Schutz gegen die Sonnenstrahlen
Revêtement de protection contre les radiations solaires facilement enlevable

(30) Priority: 26.09.1990 NL 9002100
(43) Date of publication of application: 01.04.1992
(73) Proprietor: van Rossum, Antoon Johannes Gerardus, NL-5038 NE Tilburg (NL); Bertels, Antonius Franciscus Maria, NL-5038 NE Tilburg (NL)
(72) Inventor: van Rossum, Antoon Johannes Gerardus, NL-5038 NE Tilburg (NL); Bertels, Antonius Franciscus Maria, NL-5038 NE Tilburg (NL)
(74) Representative: Lips, Hendrik Jan George, Ir.

(56) References cited:
- EP-A- 0 052 427
- EP-A- 0 115 694

## Description

The invention relates to a method according to the preamble of the main claim.

Such a method is known from EP-A-0 115 694 and is used for the temporary protection for painted or polished metal manufactured articles against weathering, contamination from the atmosphere, chemical attack etc.

According to the present invention said coating in particular is applied onto a transparent surface such as a glass plate or the outer surface of a (horticultural) greenhouse, said coating material and said second material for removing said coating material being further described in the characterizing portion of said main claim.

By applying a coating material onto the outer surface of a greenhouse burning of the plants in the greenhouse in spring and summer is prevented. Obviously the coating material has to be reasonably weather-proof but must be easely removable so that the luminous intensity of the glass wall of the greenhouse is not reduced during a number of months.

According to the invention, one effectively makes use of a coating material (product I), which, during utilization thereof as a coating possesses the indelibility (weather-resistancy) required for such a coating, but the indelibility of which, if the material is to be removed again, can be discontinued with the help of the second material (product II), which causes the coating material (product I) to be easily removable, and can be taken off the transparent surface with the help of water (rain or rinse water).

Effectively, product I can with that consist of one or more inorganic substances, which in dried condition of product I are light-reflective, one or more film shapers, one or more active substances, a preserving agent and other additives.

In particular, product I can contain one or more inorganic pigments, at least one binding agent, at least one surface-active substance, a preserving agent and other additives.

An effective binding agent for product I is constituted by a an organic (co)polymere with (neutralized) carboxylic acid residues. A thus composed product I can be brought in sprayable form with the help of water of another suitable solvent, and be applied onto the glass surface to be protected by spraying.

Product II, which is used for making the coating consisting of product I removable again, consists of a solvent with at least one basic substance, at least one complex former, at least one surface-active substance and other additives. Particularly, in product II the solvent is water with a number of active components, among which one or more basic substances such as sodium hydroxide, one or more complex shapers such as trisodium salt of nitrilo-triacetic acid, one ore more surface-active substances, and other additives. The coating consisting of product I can be sprayed with such a basic product II, and by action of the basic material product I is decomposed in such a way, that the indelibility thereof disappears, so that product I together with product II are easily removable, for example by spraying clean with water. If one applies a coating, which in humid condition (with rain) need not be transparent, effectively finely divided calcium carbonate can be used as as a suitable pigment in product I. If on the other hand, one desires a coating which also transmits light to a great extent in a humid condition, one could employ for example calcium silicate. A suitable binding agent for product I is further the ammonium salt of hydrolized, partially esterified styrene maleic acid anhydride.

In addition, other copolymeres with free carboxylic acid residues are also suitable as binding agent. Such binding agents are only slightly corrosive and are easily removable without burdening the environment. A great advantage of the method according to the invention and the materials used with it, product I and product II, is, that both product I and product II can be applied by spraying, whereby application and removal later on of a coating protective against solar radiation on a glass plate or such like can take place particularly easy.

The invention is furhter explained with the help of an embodiment.

### EXAMPLE

A coating material of the following composition was prepared:

### Composition product I

| | |
|---|---|
| finely divided calcium carbonate | 30-60 percent by weight |
| ammonium salt of hydrolized partially esterified copolymere of styrene and maleic acid-anhydride | 4-12 percent by weight |
| anti-foam agent | 0-0,2 percent by weight |
| thickening agent | 0-1 percent by weight |
| preserving agent | 0,1 percent by weight |
| non-ionic detergent | 0-0,1 percent by weight |
| water up to | 100 percent by weight. |

If this product was sprayed onto glass plates, after drying a coating protective against solar radiation formed, that had indelible properties.

For removing this coating again, a second material was prepared with the following composition:

### Composition product II (in utility concentration)

| | |
|---|---|
| sodium hydroxide | 0,05-3 percent by weight |
| trisodium salt of nitrilo-triacetic acid | 1-5 percent by weight |
| detergent | 0,05-1 percent by weight |
| water up to | 100 percent by weight. |

By spraying with this product II the coating of product I easily came loose, and the glass plates could easily be cleaned by subsequently spraying them with water.

## Claims

1. Method for applying a protective coating material onto a surface, and for removing this coating material afterwards, said coating material being formed by an aqueous composition and can be removed by using a second material in the form of an aqueous solution, **characterized in that** said coating in particular is applied onto a transparent surface such as a glass plate or the outer surface of a (horticultural) greenhouse, said coating material being formed by an aqueous composition of a finely divided inorganic pigment e.g. calcium carbonate or calcium cilicate, an ammonium salt of an organic copolymer e.g. a hydrolized copolymer of styrene and maleic acid anhydride and additives, which coating material becomes indelible after application as a result of chemical transformation, said second material for removing said coating material being formed by an aqueous solution of one or more basic substances such as sodium hydroxide, one of more chelating agents such as trisodium salt of nitrilo-triacetic acid and additives, which material is brought on top of said coating material such that the indelibility of said coating material is decomposed, after which both materials are removed from the transparent surface with the help of water.

2. Coating material to be used with the method according to claim 1, **characterized in that** said coating material has the following composition:
| | |
|---|---|
| finely divided calcium carbonate | 0-60 % by weight |
| ammonium salt of hydrolized partially esterified copolymere of styrene and maleic acid-anhydride | 4-12 % by weight |
| anti-foam agent | 0-0.2 % by weight |
| thickening agent | 0-1 % by weight |
| perserving agent | 0.1 % by weight |
| non-ionic detergent | 0-0.1 % by weight |
| water up to | 100 % |

3. Material for removing a coating material to be used with the method according to claim 1 or 2, **characterized in that** said second material has the following composition:
| | |
|---|---|
| sodium hydroxide | 0.05-3 % by wheight |
| trisodium salt of nitrilo-triacetic acid | 1-5 % by weight |
| detergent | 0.05-1 % by weight |
| water up to | 100 % |

## Patentansprüche

1. Verfahren zur Applikation eines Schutzüberzugmaterials auf eine Oberfläche zur anschließenden Entfernung dieses Überzugmaterials, wobei das Überzugmaterial mittels einer wäßrigen Zubereitung gebildet und unter Verwendung eines zweiten Materials in Form einer wäßrigen Lösung entfernt werden kann, dadurch gekennzeichnet, daß der Überzug insbesondere auf eine durchsichtige Oberfläche, z.B. eine Glasscheibe oder die Außenseite eines (gartenbaulichen) Gewächshauses aufgetragen ist, das Überzugmaterial mittels einer wäßrigen Zubereitung eines feinteiligen anorganischen Pigments, z.B. von Calciumcarbonat oder Calciumsilicat, eines Ammoniumsalzes eines organischen Copolymers, z.B. eines hydrolysierten Copolymers von Styrol und Maleinsäureanhydrid, und von Zusätzen gebildet ist, daß das Beschichtungsmaterial nach der Applikation als Ergebnis einer chemischen Umwandlung unzerstörbar wird, daß das zweite Material zur Entfernung des Beschichtungsmaterials aus einer wäßrigen Lösung einer oder mehrerer basischen Substanz(en), wie Natriumhydroxid, einem oder mehreren Gelatbildner(n), z.B. dem Trinatriumsalz von Nitrilotriessigsäure, und von Zusätzen gebildet ist, daß das Material auf die Oberseite des Beschichtungsmaterials derart aufgebracht wird, daß die Unzerstörbarkeit des Beschichtungsmaterials aufgehoben wird und daß beide Materialien mit Hilfe von Wasser von der durchsichtigen Oberfläche entfernt werden.

2. Beschichtungsmaterial zur Verwendung im Rahmen des Verfahrens nach Anspruch 1, dadurch gekennzeichnet, daß es folgende Zusammensetzung aufweist:
| | |
|---|---|
| feinteiliges Calciumcarbonat | 0 - 60 Gew.-% |
| Ammoniumsalz eines hydrolysierten, teilweise veresterten Copolymers von Styrol und Maleinsäureanhydrid | 4 - 12 Gew.-% |
| Antischäummittel | 0 - 0,2 Gew.-% |
| Dickungsmittel | 0 - 1 Gew.-% |
| Konservierungsmittel | 0,1 Gew.-% |
| nicht-ionisches Detergens | 0 - 0,1 Gew.-% |
| mit Wasser aufgefüllt auf | 100% |

3. Material zur Entfernung eines Beschichtungsmaterials zur Verwendung im Rahmen des Verfahrens nach Ansprüchen 1 oder 2, dadurch gekennzeichnet, daß das zweite Material folgende Zusammensetzung aufweist:
| | |
|---|---|
| Natriumhydroxid | 0,05 - 3 Gew.-% |
| Trinatriumsalz der Nitrilotriessigsäure | 1 - 5 Gew.-% |
| Detergens | 0,05 - 1 Gew.-% |
| mit Wasser aufgefüllt auf | 100%. |

## Revendications

1. Procédé pour appliquer un matériau de revêtement protecteur sur une surface, et pour enlever ensuite ce matériau de revêtement, ledit matériau de revêtement étant formé d'une composition aqueuse et pouvant être enlevée en utilisant un second matériau sous la forme d'une solution aqueuse, caractérisé en ce que ledit revêtement en particulier est appliqué sur une surface transparente telle qu'une plaque de verre ou la surface extérieure d'une serre (d'horticulture), ledit matériau de revêtement étant formé par une composition aqueuse d'un pigment inorganique finement divisé, par exemple de carbonate de calcium ou de silicate de calcium, d'un sel d'ammonium d'un copolymère organique, par exemple d'un copolymère hydrolysé de styrène et d'anhydride d'acide maléique, et d'additifs, lequel matériau de revêtement devient indélébile après application par suite d'une transformation chimique, ledit second matériau pour enlever ledit matériau de revêtement étant formé par une solution aqueuse d'une ou plusieurs substances basiques telles que l'hydroxyde de sodium, d'un ou plusieurs agents chélatants tels que le sel trisodique de l'acide nitrilo-triacétique, et d'additifs, lequel matériau est appliqué sur le matériau de revêtement de telle sorte que le caractère indélébile dudit matériau de revêtement est décomposé, après quoi les deux matériaux sont enlevés de la surface transparente à l'aide d'eau.

2. Matériau de revêtement destiné à être utilisé avec le procédé selon la revendication 1, caractérisé en ce que ledit matériau de revêtement présente la composition suivante :
| | |
|---|---|
| carbonate de calcium finement divisé | 0-60% en poids |
| sel d'ammonium d'un copolymère hydrolysé et partiellement estérifié de styrène et d'anhydride d'acide maléique | 4-12% en poids |
| agent anti-mousse | 0-0,2% en poids |
| agent épaississant | 0-1% en poids |
| agent de conservation | 0,1% en poids |
| détergent non-ionique | 0-0,1% en poids |
| eau complément à | 100% |

3. Matériau pour enlever un matériau de revêtement destiné à être utilisé avec le procédé selon la revendication 1, caractérisé en ce que ledit second matériau présente la composition suivante :
| | |
|---|---|
| hydroxyde de sodium | 0,05-3% en poids |
| sel trisodique de l'acide nitrilo- | |
| triacétique | 1-5% en poids |
| détergent | 0,05-1% en poids |
| eau complément à | 100% |
